(19) Europäisches Patentamt
European Patent Office
Office européen des brevets

(11) EP 4 768 718 A1

(12) EUROPEAN PATENT APPLICATION

(43) Date of publication:
01.07.2026 Bulletin 2026/27

(21) Application number: 24307345.9

(22) Date of filing: 31.12.2024

(51) International Patent Classification (IPC):
F03D 7/02 (2006.01)        F03D 7/04 (2006.01)

(52) Cooperative Patent Classification (CPC):
F03D 7/049; F03D 7/0204; F03D 7/046;
F05B 2270/20; F05B 2270/32; F05B 2270/321;
F05B 2270/329

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: TotalEnergies OneTech
92400 Courbevoie (FR)

(72) Inventor: KADOCHE, Elie
92400 Courbevoie (FR)

(74) Representative: Lavoix
2, place d'Estienne d'Orves
75441 Paris Cedex 09 (FR)

(54) A CONTROL METHOD FOR CONTROLLING A WIND FARM, RELATED ELECTRONIC CONTROL DEVICE A COMPUTER PROGRAM PRODUCT

(57)   A control method (100) for controlling a wind farm comprising a plurality of wind turbines, based on an estimated wind velocity and an estimated wind direction of the wind on the wind farm.

The method comprises receiving a wind direction and a wind velocity. The method further comprises determining (120) a group of yaw angles sets and evaluating (130), for each yaw angle set, a power generated by the wind farm.

The method further comprises generating (150) new yaw angle sets and modifying (160) the value of each yaw angle according to a probability law. The method further comprises adjusting (170).

The method further comprises selecting (190), among the adjusted yaw angle sets, the set for which the power generated is the highest, the yaw angles of such selection set being the desired yaw angles, and sending (200), to each wind turbine, the respective desired yaw angle.

FIG.3

EP 4 768 718 A1

**Description**

The present invention concerns a control method for controlling a wind farm.

The present invention in addition concerns a computer program product and an electronic control device configured to implement such a method.

The present invention concerns the domain of piloting the orientation of wind turbines within a wind farm to improve its productivity.

The productivity of a wind turbine, i.e. the generated power, depends mainly on the velocity of the wind and its direction with respect to the wind turbine.

In particular, a wind turbine only produces energy if the wind reaching the wind turbine has a direction and velocity within a specific respective range. In particular, it is known that the optimal wind production is reached when the wind turbine is facing the wind direction and when the wind velocity is neither too high, nor too small.

Thus, to improve the production of the wind turbine, it is known to control its yaw angle, i.e. its rotation along an elongation axis of the wind turbine, via a yaw actuator, to try to reach an optimal velocity and direction of the wind on blades of the wind turbine.

When considering a farm of wind turbines, it is known to measure the wind velocity and direction at a point close to the wind farm. From this measurement, it is known apply a control technique, at each time instant, consisting in commanding the yaw angle of each turbine to have each wind turbine tracking said measure.

However, this technique faces a main issue that make it strongly suboptimal.

Wind turbines are massive elements, so that the variation of their yaw angle cannot be greater than a certain threshold, e.g. few degrees by minute. Thus, if the wind direction is changing rapidly, it is not possible for the wind turbine to track such changes properly. In other words, in this case, the yaw actuators are always late compared the wind changes. Thus, at each time, the wind turbines do not have the appropriate yaw angle, with respect to the wind direction.

It thus exist other control technics that makes it possible to reach better performances of the wind farm. Some of these technics require deriving a mathematical model of the power generated by the wind farm as a function of several parameters. Thus, control prcesses known *per se,* may be applied to the model in order to choose an appropriate yaw angle for each wind turbine.

However, deriving such a model if often a complex task that requires a lot of time, and generally leads to a highly nonlinear model. Due to the nonlinearities, the classic control processes that are based on optimal control struggle to reach a global optimum.

Thus, to reach good performances, such control technics often requires a lot of computation time.

Another approach consists in avoiding to provide an analytical model but rather uses a simulator. Actually, some simulators provide realistic evaluation of the power generated by a wind farm.

Based on such simulator, it is known to apply a genetic algorithm to determine heuristically, for each wind turbine of the wind farm, a respective yaw angle that provide a sensibly good performance of the wind farm, i.e. a greater power generated by the wind than with the wind tracking approach. Such algorithm has the advantage not too require too much computation time as the classic optimal control technics and can thus be implemented online.

However, the performance of such control technic can still be improved within a computation time in the same order of magnitude.

To this end, the present invention concerns a control method for controlling a wind farm comprising a plurality of wind turbines, based on an estimated wind velocity and an estimated wind direction of the wind on the wind farm,

each wind turbine being configured, upon receiving a desired yaw angle, to rotate, around an elongation axis respective of the wind turbine, to reach a direction forming an angle with the wind direction which is equal to said desired yaw angle,
the method being implemented by an electronic control device and comprising the following steps:

- receiving the wind direction and the wind velocity,
- determining a group of yaw angles sets, each yaw angle set comprising a yaw angle respective of each wind turbine,
  each yaw angle set comprising, for each wind turbine, a respective yaw angle value,
- evaluating, for each yaw angle set, a power generated by the wind farm based on each yaw angle of the yaw angle set, on the wind velocity and the estimated wind direction,
- generating some new yaw angles sets from the group of yaw angle set, based on the evaluated power generated of each yaw angle set,
- for each generated yaw angle sets, modifying the value of each yaw angle according to a probability law, to obtain modified yaw angle sets,
- for each modified yaw angle set, adjusting the value of each corresponding yaw angle based on a gradient descent process applied on the power generated by the wind farm, to obtain a group of adjusted yaw angle sets, further denoted adjusted group,

- selecting, among the adjusted yaw angle sets, the set for which the power generated is the highest, the yaw angles of such selection set being the desired yaw angles,

- sending, to each wind turbine, the respective desired yaw angle.

According to specific embodiments of the invention, the control method comprises one or more of the following features, taken solely, or according to any feasible combination:

- during the determining step, the group comprises:

  ◦ a plurality of yaw angle sets wherein a value of each yaw angle is determined randomly,
  ◦ a yaw angle set determined based on an heuristic process, and
  ◦ a yaw angle set wherein each wind turbine is facing the wind direction;

- the method in addition comprises, between the evaluating step and the generating step:

  ◦ forming a subgroup of the group of yaw angle sets based on the evaluated power generated of each yaw angle set,
  the subgroup comprising less yaw angle sets than in the group (P) of yaw angle sets,

  during the adjusting step, for each yaw angle sets of the subgroup, the value of each corresponding yaw angle being in addition adjusted based on a gradient descent technic applied on the power generated by the wind farm, the adjusted group in addition comprising the adjusted yaw angle sets of the subgroup;

- the generating step comprises the following sub steps:

  ◦ selecting several couples of yaw angles sets among the group, based on a random process weighted by the power generated evaluated during the evaluating step,
  ◦ determining for each couple, a respective new yaw angle sets, for each new yaw angle set, the value of each yaw angle being chosen either in a yaw angle set of said couple or in the other yaw angle set of said couple;

- during the receiving step, a yaw angle bound is received, during the determining step, each yaw angle of each yaw angle set being bounded by the received yaw angle bound;

- the receiving step comprises receiving a first parameter,
  the modifying step comprising the following sub steps for each yaw angle of each new yaw angle set:

  ◦ determining a second parameter based on the first parameter and based on the value of said yaw angle,
  ◦ determining a beta distribution with the first and the second parameters as shape parameters, and with a mode equal to the corresponding yaw angle value,
  ◦ determining the modified value of said yaw angle by sampling a random value from the respective Beta distribution;

- the second parameter is determined according to the following formula:

$$\beta = \frac{\alpha - 1}{\widehat{\theta}_\iota} + 2 - \alpha$$

where $\alpha$ is the first parameter and $\hat{\theta}_l$ is the value of said yaw angle;
- the method further comprises after the adjusting step, an updating step wherein the group is updated as being the adjusted group,

  the steps of evaluating, generating, modifying, adjusting and updating (180) being iterated several times, during the selecting step, the selected set being selected among the lastly determined adjusted group;

- during the updating step, the first parameter is updated to a greater value than its current value;

- the adjusting step comprises, for each modified yaw angle set, a single step of gradient descent process;
- during the evaluating step, the power generated by the wind farm is determined by a simulator, from each yaw angle of a yaw angle set, the wind direction and the wind velocity;
- during the adjusting step, for each modified yaw angle set, a gradient of the power generated by the wind farm is determined using a finite difference process based on the simulator; and
- the selecting step further comprises adjusting the value of each yaw angle of the selected yaw angle set based on a gradient descent process applied on the power generated by the wind farm,

the desired yaw angles being the yaw angles resulting from said gradient descent process.

The present invention further concerns a computer program product comprising software instructions which, when being executed by a computer, implement such a control method.

The present invention further concerns a control device for controlling a wind farm comprising a plurality of wind turbines, based on an estimated general wind velocity and an estimated wind direction of the wind on the wind farm,

each wind turbine being configured, upon receiving a desired yaw angle, to rotate, around an elongation axis respective of the wind turbine, to reach a direction forming an angle with the wind direction which is equal to said desired yaw angle,

the electronic control device being configured to:

- receive the wind direction and the wind velocity,
- determine a group of yaw angles sets, each yaw angle set comprising a yaw angle respective of each wind turbine, each yaw angle set comprising, for each wind turbine, a respective yaw angle value,
- evaluate, for each yaw angle set, a power generated by the wind farm based on each yaw angle of the yaw angle set, on the wind velocity and the estimated wind direction,
- generate some new yaw angle sets from the group of yaw angle set, based on the evaluated power generated of each yaw angle set,
- modify, for each generated yaw angle sets, the value of each yaw angle according to probability law, to obtain modified yaw angle sets,
- adjust, for each modified yaw angle set, the value of each corresponding yaw angle based on a gradient descent process applied on the power generated by the wind farm, to obtain a group of adjusted yaw angle sets, further denoted adjusted group,
- select, among the adjusted yaw angle sets, the set for which the power generated is the highest, the yaw angle of such selection set being the desired yaw angles, and
- send, to each wind turbine, the respective desired yaw angle.

The invention will be better understood upon reading the following description, only given as an example of embodiments of the invention, and in reference to the attached Figures, among which:

- Figure 1 is schematic view of wind farm comprising an electronic control device, according to the invention, for a controlling the wind farm;
- Figure 2 is a front view of a wind turbine belonging to the wind farm of Figure 1;
- Figure 3 is flowchart of a control method implemented by the electronic control device of Figure 1.

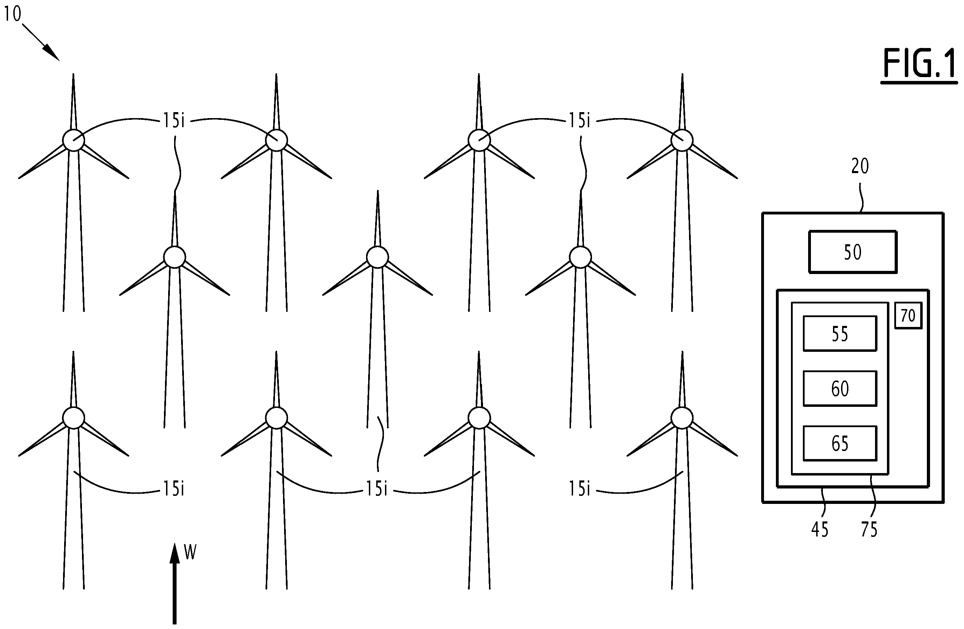

In Figure 1 is represented a wind farm 10. The wind farm 10 is for example on offshore wind farm. Alternatively, the wind farm 10 is an onshore wind farm.

The wind farm 10 comprises several wind turbines 15i, for example a number L of wind turbines 15i, with "i" evolving from 0 to L-1, and an electronic control system 20. The number L is at least two, for example greater than ten, twenty, fifty or even a hundred.

As represented in figure 1, the wind turbines 15i of the wind farm 10 are for example bottom-fixed wind turbines, i.e. wind turbines comprising a monopile solidly fixed to the ground, or to the seabed in case of offshore wind turbine.

According to a non-shown variant, and only in the case of an offshore wind farm, the wind turbines are floating wind turbines, i.e. each wind turbine comprises a foundation floating on a water body and bearing the rest of the wind turbine.

Alternatively, and only in case of an offshore wind farm, the wind farm is mixed, comprising both bottom-fixed and floating wind turbines.

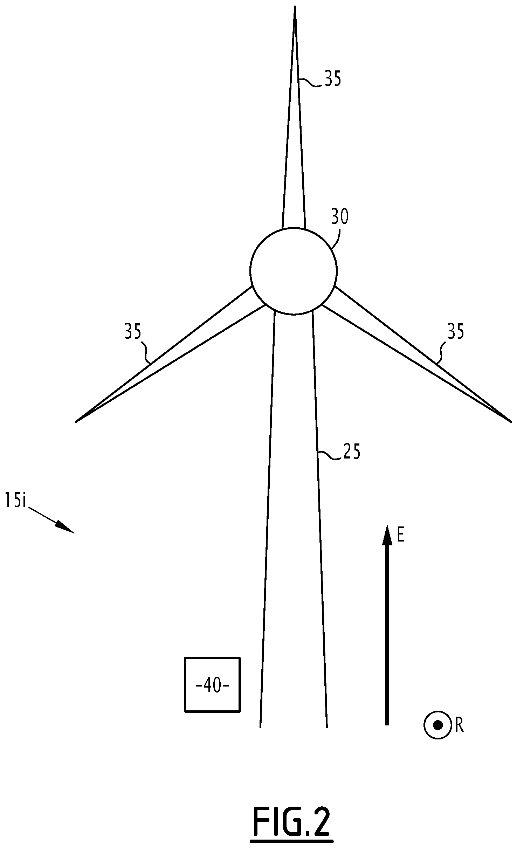

Figure 2 represents a front view of one wind turbine 15i of the wind farm 10.

The wind turbine 15i comprises a tower 25 extending along an elongation axis E.

The wind turbine 15i in addition comprises a rotor 30, for example located at an extremity of the tower 25. The rotor 30 comprises blades 35 configured to rotate around a rotation axis R, which is sensibly perpendicular to the elongation axis E.

In a known manner, the blades 35 are configured to be driven in rotation around the rotation axis R, by the wind W flowing through the wind turbine 15i. Then, under the effect of wind, the blades drive the rotor in rotation around the rotation axis R, thus producing electricity. The wind is characterized by two main parameters: the wind direction K and the wind velocity V.

The wind turbine 15i in addition comprises a yaw actuator 40 connected to the electronic control system 20.

The yaw actuator 40 is configured, upon a receiving a desired yaw angle $\theta_i^*$, to make the wind turbine 15i rotate around its elongation axis E, to reach a direction forming an angle with the wind direction *K*, which is equal to said desired yaw angle $\theta_i^*$.

Such control is known *per se.*

Back to figure 1, the electronic control system 20 comprises an electronic control device 45 and preferably a wind sensor 50.

The control device 45 is connected to each wind turbine 15 and preferably to the wind sensor 50.

The optional wind sensor 50 is configured to measure the wind velocity V and direction *K* on the wind farm 10

The control device 45 comprises a receiving module 55, a calculating module 60, and a sending module 65.

In the example shown in Figure 1, the control device 25 is a computer. It comprises a processor 70 and a memory 75 associated with the processor 70.

In the example shown in Figure 1, the receiving module 55, the calculating module 60, and the sending module 65, are each implemented in the form of software, or a software brick, and can be executed by the processor 70. The memory 75 of the control device 45 is then able to store a receiving software, a calculating software, a sending software, and optionally a pretreatment software.

When the control device 45 is implemented in the form of one or more software programs, i.e. in the form of a computer program, it can also be recorded on a computer-readable medium (not shown). The computer-readable medium is, for example, a medium capable of storing electronic instructions and of being coupled to a bus of a computer system. By way of example, the readable medium is an optical disk, a magneto-optical disk, a ROM memory, a RAM memory, any type of non-volatile memory (e.g. EPROM, EEPROM, FLASH, NVRAM), a magnetic card or an optical card. A computer program containing software instructions is stored on the readable medium.

Alternatively, and not shown here, the receiving module 55, the calculating module 60, the sending module 65, are each implemented in the form of a programmable logic component, such as an FPGA (Field Programmable Gate Array), or an integrated circuit, such as an ASIC (Application Specific Integrated Circuit).

The receiving module 55 is configured to receive the wind direction K and the wind velocity V, preferably from the wind sensor 50.

Preferably, the receiving module 55 is configured to receive a yaw angle bound $\theta_{max}$. The bound is for example equal to 20° or 30°.

Advantageously, the receiving module 55 is configured to receive a first parameter $\alpha$, that will be detailed below.

The calculating module 60 is configured to determine, for each wind turbine 15i, a desired yaw angle $\theta_i^*$ that optimize the power generated by the wind farm.

The actions that the calculating module 55 is configured to performed to this end, will be detailed further in reference to a control method 100 implemented by the electronic control device 45.

The control device 45 further comprises a sending module 65 connected to the yaw actuator 40 of each wind turbine 15i and configured to send, to each wind turbine 15i, the respective desired yaw angle $\theta_i^*$.

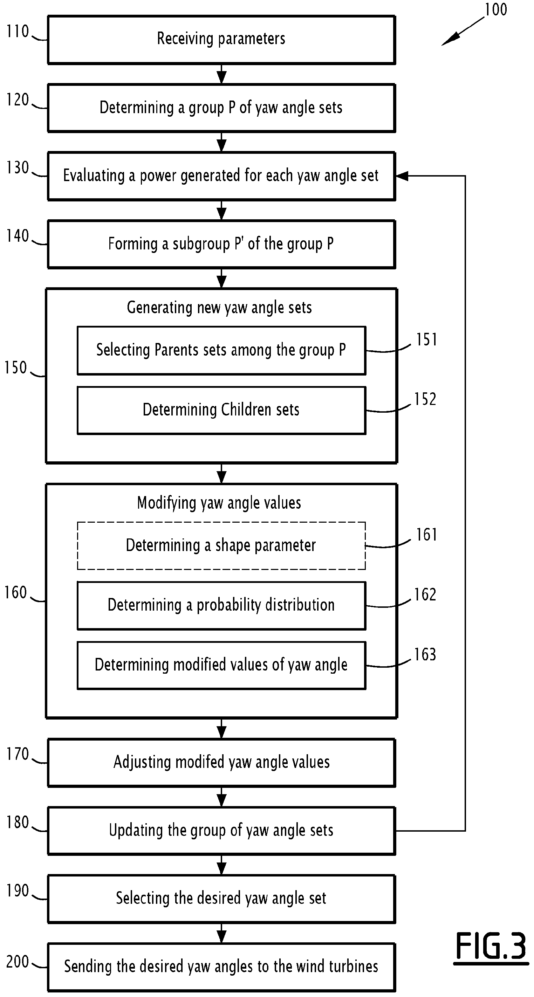

The functioning of wind farm 10 and in particular of the control system 20 will now be detailed by a control method 100 and in reference to figure 3 representing a flowchart of said control method 100.

The control method 100 is implemented by the electronic control device 45.

Initially, the wind is flowing through the wind farm 10 and it is desired to control each wind turbine 15i to optimize the power generated by the wind farm 10.

The control method 100 comprises a receiving step 110 wherein the receiving module 55 receives the wind direction *K* and the wind velocity *V*, preferably from the wind sensor 50.

Preferably, during the receiving step 110, the receiving module 55 receives the yaw angle bound $\theta_{max}$.

Advantageously, during the receiving step 110, the receiving module 55 receives the first parameter $\alpha$.

The method 100 further comprises a determining step 120 wherein the calculating module 60 determines a group P of yaw angles sets $\Theta^1, ... \Theta^N$, each yaw angle set $\Theta^1, ... \Theta^N$ comprising a yaw angle $\theta_i$ respective of each wind turbine 15i. Each yaw angle set $\Theta^1, ... \Theta^N$ comprises, for each wind turbine 15i, a respective yaw angle value $\theta_i$, i.e. L yanw angle values.

In other words, each yaw angle set $\Theta^1, ..., \Theta^N$ is preferably a vector comprising a component respective of each wind turbine 15i. Each component of each yaw angle set $\Theta^1, ..., \Theta^N$ is a value of the yaw angle $\theta_i$ respective of said wind turbine 15i.

To this end, the calculating module 60 preferably determines the group P as comprising a plurality of yaw angle sets $\Theta^1, ..., \Theta^{N-2}$ wherein a value of each yaw angle $\theta_i$ is determined randomly.

The calculating module 60 preferably determines the group P as comprising in addition, or alternatively, a yaw angle set $\Theta^{N-1}$ determined based on an heuristic process,

As an example, the heuristic process is an optimized solution computed with a serial-refined process developed by the National Renewable Energy Laboratory.

According to another example, the heuristic process is an optimized solution based on some human expert knowledge.

According to still another example, the heuristic process is a random solution where the yaw angles values $\theta_i$ are randomly computed and bounded by the the received yaw angle bound $\theta_{max}$.

The calculating module 60 preferably determines the group P as comprising in addition, or alternatively, a yaw angle set $\Theta^N$ wherein each wind turbine 15i is facing the wind direction $K$.

Preferably, during the determining step 120, each yaw angle $\theta_i$ of each yaw angle set $\Theta^1, ... \Theta^N$ is bounded by the received yaw angle bound $\theta_{max}$. In other words, each yaw angle $\theta_i$ is comprised between $-\theta_{max}$ and $+\theta_{max}$.

The group P determined by during the determining step 120 is preferably also denoted: initial population.

The control method 100 further comprises an evaluating step 130, wherein the calculation module 60 evaluates, for each yaw angle set $\Theta^1, ... \Theta^N$, a power generated by the wind farm 10 based on each yaw angle $\theta_i$ of the yaw angle set $\Theta^1, ... \Theta^N$, on the wind velocity $V$ and the estimated wind direction $K$.

Preferably, during the evaluating step 130, the power generated by the wind farm 10 is determined by a simulator, from the each yaw angle $\theta_i$ of a yaw angle set $\Theta$, the wind direction $K$ and the wind velocity $V$.

The simulator is preferably a low-fidelity simulator, such as the simulator FLORIS, known *per se*.

Optionally, the method 100 further comprises a forming step 140, wherein the calculating module 60 forms a subgroup P' of the group P of yaw angle sets $\Theta^1, ... \Theta^N$ based on the evaluated power generated of each yaw angle set $\Theta^1, ... \Theta^N$. The subgroup P' comprises less yaw angle sets $\Theta^1, ... \Theta^N$ than in the group P of yaw angle sets $\Theta^1, ... \Theta^N$.

Preferably, the subgroup P' comprises a predetermined number of yaw angle sets.

According to an example, the yaw angles sets of the sub group P' are the ones having the greater evaluated power generated by the wind farm 10.

According to another example, said yaw angle sets are chosen pseudo-randomly wherein each yaw angle set has a probability to be chosen which is proportional to its evaluated power generated.

The control method 100 further comprises a generating step 150, wherein the calculating module 60 generates some new yaw angle sets $\hat{\Theta}^1, ... \hat{\Theta}^N$ from the group P of yaw angle set $\Theta^1, ... \Theta^N$, based on the evaluated power generated of each yaw angle set $\Theta^1, ... \Theta^N$.

Preferably, to this end, the generating step 150 comprises a selecting sub step 151 wherein the calculating module 60 selects several couples of yaw angles sets $\Theta^1, ... \Theta^N$ among the group P based on a random process weighted by the power generated evaluated during the evaluating step 130. Such selected yaw angle sets are further denoted: Parents sets.

Preferably, each couple of yaw angle sets comprises two distinct yaw angle sets.

For example, the Parents sets are pseudo-randomly selected according to probability law wherein the probability of each yaw angle set $\Theta^1, ... \Theta^N$ to be chosen, is proportional to its power generated.

Advantageously, the generating step 150 in addition comprises a first determining sub step 152, wherein the calculating module 60 determines for each couple, a respective new yaw angle sets $\hat{\Theta}^1, ..., \hat{\Theta}^N$. Each new yaw angle set $\hat{\Theta}^1, ..., \hat{\Theta}^N$ is further denoted: Children set.

For each new yaw angle set $\hat{\Theta}^1, ..., \hat{\Theta}^N$, the value of each yaw angle $\hat{\theta}_i$ is chosen either in a yaw angle set of said couple or in the other yaw angle set of said couple. In other words, each yaw angle $\hat{\theta}_i$ of a respective Children set $\hat{\Theta}^1, ..., \hat{\Theta}^N$ is either a yaw angle $\theta_i$ of one of its Parent sets or a yaw angle $\theta_i$ of the other Parent set, preferably according to a predetermined decision policy.

For example, the predetermined decision policy states that the first half of yaw angles $\hat{\theta}_i$ of a Children set $\hat{\Theta}^1, ..., \hat{\Theta}^N$ are chosen in its first parent set 0 and the last half of yaw angles of said Children set $\hat{\Theta}^1, ..., \hat{\Theta}^N$ are chosen in its second parent set 0.

The control method further comprises a modifying step 160, wherein the calculating module 60 modifies, for each generated yaw angle set $\hat{\Theta}^1, ... \hat{\Theta}^N$, i.e. for each Children set $\hat{\Theta}^1, ... \hat{\Theta}^N$, the value of each yaw angle $\hat{\theta}_i$ according to a probability law, to obtain modified yaw angle sets $\check{\Theta}^1, ... \check{\Theta}^N$

Optionally, the modifying step 160 comprises, for each yaw angle $\hat{\theta}_i$ of each Children set $\hat{\Theta}^1, ... \hat{\Theta}^N$, the following sub steps.

During a second determining sub step 161, the calculating module 60 determines a second parameter $\beta$ based on the first parameter $\alpha$ and based on the value of said yaw angle $\hat{\theta}_i$.

As an example, the second parameter $\beta$ is determined according to the following formula:

[1]

$$\beta = \frac{\alpha - 1}{\hat{\theta}_i} + 2 - \alpha$$

During a third determining sub step 162, wherein the calculating module 60 determines a Beta distribution with the first $\alpha$ and the second $\beta$ parameters as shape parameters, and with a mode equal to the corresponding yaw angle value $\hat{\theta}_i$.

During a fourth determining sub step 163, the calculating module 60 determines the modified value $\check{\theta}_i$ of said yaw angle by sampling a random value from the respective Beta distribution.

By definition, the Beta distribution is generally defined between 0 and 1. However, is can be adjusted to be defined between two chosen bounds, as known *perse*. In the present case, it is adjusted to be defined between the bounds $-\theta_{max}$ and $\theta_{max}$.

Alternatively, the yaw angle value $\hat{\theta}_l$ is normalized between $-\theta_{max}$ and $\theta_{max}$ before the second determining sub step 161 and the module value $\check{\theta}_i$ is projected between $-\theta_{max}$ and $\theta_{max}$ after the fourth determining sub step 163.

According to a variant of the modifying step 160, said step 160 does not comprises the second determining sub step 161.

In this variant, during the third determining sub step 162, the calculating module 60 determines a Von Mises distribution with the first parameters $\alpha$ as the measure of the concentration and the yaw angle value $\hat{\theta}_l$ as the mean value.

In this variant, during the fourth determining sub step 163, the calculating module 60 determines the modified value $\check{\theta}_i$ of said yaw angle by sampling a random value from the respective Von Mises distribution.

Similarly as for the beta law, the Von Mises distribution is generally defined between $-\pi$ and $\pi$. However, is can be adjusted to be defined between two chosen bounds, as known *per se*. In the present case, it is adjusted to be defined between the bounds $-\theta_{max}$ and $\theta_{max}$.

Alternatively, the yaw angle value $\hat{\theta}_l$ is projected form the interval from the interval $-\theta_{max}, \theta_{max}$ to the interval $-\pi, \pi$ before the third determining sub step 162 and the module value $\check{\theta}_i$ is projected between $-\theta_{max}$ and $\theta_{max}$ after the fourth determining sub step 163.

The control method 100 further comprises an adjusting sub step 170, wherein the calculating module 60 adjusts, for each modified yaw angle set $\check{\Theta}^1, ... \check{\Theta}^N$, the value of each corresponding yaw angle $\check{\theta}_i$, to obtain a group P" of adjusted yaw angle sets $\overline{\Theta}^1, ..., \overline{\Theta}^N$, further denoted adjusted group P". This adjustment is based on a gradient descent process applied on the power generated by the wind farm.

Preferably, during the adjusting step 170, for each modified yaw angle set $\check{\Theta}^1,... \check{\Theta}^N$, a gradient of the power generated by the wind farm is determined using a finite difference process based on the simulator, as known *per se*.

Optionally, the adjusting step 170 comprises, for each modified yaw angle set $\check{\Theta}^1, ... \check{\Theta}^N$, a single step of gradient descent process. The gradient descent process is for example a projected gradient descent process, known *per se,* ensuring that the yaw angles of the adjusted yaw angle sets $\overline{\Theta}^1, ..., \overline{\Theta}^N$ remain comprised between $-\theta_{max}$ and $\theta_{max}$.

According to the optional complement wherein the control method comprises the step 140 of forming the subgroup P', during the adjusting step 170, for each yaw angle sets $\Theta^1, ... \Theta^N$ of the subgroup P', the value of each corresponding yaw angle $\theta_i$ is preferably further adjusted based on said gradient descent process applied on the power generated by the wind farm 10. In this optional complement, the adjusted group P" in addition comprising the adjusted yaw angle sets of the subgroup P'.

According to an optional complement, the control method 100 further comprises an updating step 180 wherein the group P is updated as being the adjusted group P". The steps of evaluating 130, generating 150, modifying 160, adjusting 170 and updating 180, and preferably of forming 140, are iterated several times. In particular, these steps are iterated until a stopping criterion is met. For example, this criterion is a maximum amount of iterations.

Preferably, during the updating step 180, the first parameter $\alpha$ is updated to a greater value than its current value. As an example, the first parameter $\alpha$ is doubled during the updating step 180. This makes it possible to tighten the Beta, respectively the Von Mises distribution around its mode, respectively its mean value. To this end, as we go along iterations, less exploration is provided during the modifying step 160 thus making it possible to optimize more and more the current yaw angle sets or yaw angle values close to the one of such sets.

The control method further comprises a selecting step 190, wherein the calculating module 60 selects, among the adjusted yaw angle sets $\overline{\Theta}^1, ..., \overline{\Theta}^N,$ the set 0* for which the power generated is the highest. The yaw angle of such selected set 0* being the desired yaw angles $\theta_i^*$.

According to the optional complement wherein the control method 100 comprises the updating step 180 and the subsequent iterations, during the selecting step 190, the selected set 0* is selected among the lastly determined adjusted group P".

Optionally, the selecting step 190 further comprises adjusting the value of each yaw angle $\theta_i$ of the selected yaw angle set 0* based on a gradient descent process applied on the power generated by the wind farm 10. In that case, the desired yaw angles $\theta_i^*$ is the yaw angles resulting from said gradient descent process.

Preferably, the gradient descent process implemented during the selecting step 190 is similar as the gradient descent process already described in the adjusting step 170, except that it comprises more than a single step of gradient descent. As an example, the gradient descent process is iterated until a difference between the determined gradient and the preceding gradient is lower than a predefined threshold.

The control method 100 further comprises a sending step 200 wherein the sending module 65 sends, to each wind turbine 15i, the corresponding desired yaw angle $\theta_i^*$ from the desired yaw angle set 0*.

Then, the yaw controller 40 of each wind turbine 15i makes the wind turbine 15i rotate around its elongation axis E to each the desired yaw angle $\theta_i^*$ with the wind direction K.

Said control method 100 is for example iterated at a next instant for different values of wind direction *K,* and wind velocity *V.*

**Claims**

1. A control method (100) for controlling a wind farm (10) comprising a plurality of wind turbines (15i), based on an estimated wind velocity (7) and an estimated wind direction (*K*) of the wind (W) on the wind farm (10),

   each wind turbine (15i) being configured, upon receiving a desired yaw angle ( $\theta_i^*$ ), to rotate, around an elongation axis (E) respective of the wind turbine (15i), to reach a direction forming an angle with the wind direction (*K*) which is equal to said desired yaw angle ( $\theta_i^*$ ), the method being implemented by an electronic control device (45) and comprising the following steps:

   - receiving (110) the wind direction (*K*) and the wind velocity (*V*),
   - determining (120) a group (P) of yaw angles sets ($\Theta^1, ... \Theta^N$), each yaw angle set ($\Theta^1, ... \Theta^N$) comprising a yaw angle ($\theta_i$) respective of each wind turbine (15i), each yaw angle set ($\Theta^1, ... \Theta^N$) comprising, for each wind turbine (15i), a respective yaw angle value ($\theta_i$),
   - evaluating (130), for each yaw angle set ($\Theta^1, ... \Theta^N$), a power generated by the wind farm (10) based on each yaw angle ($\theta_i$) of the yaw angle set ($\Theta^1, ... \Theta^N$), on the wind velocity (V) and the estimated wind direction *(K),*
   - generating (150) some new yaw angles sets ($\hat{\Theta}^1, ... \hat{\Theta}^N$) from the group (P) of yaw angle set ($\Theta^1, ... \Theta^N$), based on the evaluated power generated of each yaw angle set ($\Theta^1, ... \Theta^N$),
   - for each generated yaw angle sets ($\hat{\Theta}^1, ... \hat{\Theta}^N$), modifying (160) the value of each yaw angle ($\hat{\theta}_i$) according to a probability law, to obtain modified yaw angle sets ($\check{\Theta}^1, ... \check{\Theta}^N$)
   - for each modified yaw angle set ($\check{\Theta}^1, ... \check{\Theta}^N$), adjusting (170) the value of each corresponding yaw angle ($\theta_i$) based on a gradient descent process applied on the power generated by the wind farm, to obtain a group (P") of adjusted yaw angle sets ($\overline{\Theta}^1, ..., \overline{\Theta}^N$), further denoted adjusted group (P"),
   - selecting (190), among the adjusted yaw angle sets ($\overline{\Theta}^1, ..., \overline{\Theta}^N$), the set (0*) for which the power generated is the highest, the yaw angles of such selection set being the desired yaw angles ( $\theta_i^*$ ), and
   - sending (200), to each wind turbine (15i), the respective desired yaw angle ( $\theta_i^*$ ).

2. The control method (100) according to claim 1, wherein during the determining step (120), the group (P) comprises:

   - a plurality of yaw angle sets ($\Theta^1, ..., \Theta^{N-2}$) wherein a value of each yaw angle ($\theta_i$) is determined randomly,
   - a yaw angle set ($\Theta^{N-1}$) determined based on an heuristic process, and
   - a yaw angle set ($\Theta^N$) wherein each wind turbine (15i) is facing the wind direction (*K*).

3. The control method (100) according to claim 1 or 2, in addition comprising, between the evaluating step (130) and the generating step (150):

   - forming (140) a subgroup (P') of the group (P) of yaw angle sets ($\Theta^1, ... \Theta^N$) based on the evaluated power generated of each yaw angle set ($\Theta^1, ... \Theta^N$), the subgroup (P') comprising less yaw angle sets ($\Theta^1, ... \Theta^N$) than in the group (P) of yaw angle sets ($\Theta^1, ... \Theta^N$),
   during the adjusting step (170), for each yaw angle sets ($\Theta^1, ... \Theta^N$) of the subgroup (P'), the value of each

corresponding yaw angle ($\theta_i$) being in addition adjusted based on a gradient descent technic applied on the power generated by the wind farm (10),

the adjusted group (P'') in addition comprising the adjusted yaw angle sets of the subgroup (P').

4. The control method (100) according to any of the preceding claims, wherein the generating step (150) comprises the following sub steps:

- selecting (151) several couples of yaw angles sets ($\Theta^1, ... \Theta^N$) among the group (P), based on a random process weighted by the power generated evaluated during the evaluating step (130),
- determining (152) for each couple, a respective new yaw angle sets ($\hat{\Theta}^1, ..., \hat{\Theta}^N$), for each new yaw angle set ($\hat{\Theta}^1, ..., \hat{\Theta}^N$), the value of each yaw angle ($\hat{\theta}_i$) being chosen either in a yaw angle set of said couple or in the other yaw angle set of said couple.

5. The control method (100) according to any of the preceding claims, wherein during the receiving step (110), a yaw angle bound ($\theta_{max}$) is received,

during the determining step (120), each yaw angle ($\theta_i$) of each yaw angle set ($\Theta^1, ... \Theta^N$) being bounded by the received yaw angle bound ($\theta_{max}$).

6. The control method (100) according to any of the preceding claims, wherein the receiving step (110) comprises receiving a first parameter ($\alpha$),

the modifying step (160) comprising the following sub steps for each yaw angle ($\hat{\theta}_i$) of each new yaw angle set ($\hat{\Theta}^1, ... \hat{\Theta}^N$):

- determining (161) a second parameter ($\beta$) based on the first parameter ($\alpha$) and based on the value of said yaw angle ($\hat{\theta}_i$),
- determining (162) a beta distribution with the first ($\alpha$) and the second ($\beta$) parameters as shape parameters, and with a mode equal to the corresponding yaw angle value ($\hat{\theta}_i$),
- determining (163) the modified value of said yaw angle by sampling a random value from the respective Beta distribution.

7. The control method (100) according to the preceding claim, wherein the second parameter ($\beta$) is determined according to the following formula:

$$\beta = \frac{\alpha - 1}{\hat{\theta}_\iota} + 2 - \alpha$$

where $\alpha$ is the first parameter ($\alpha$) and $\hat{\theta}_I$ is the value of said yaw angle ($\hat{\theta}_i$).

8. The control method (100) according to any of the preceding claims, further comprising after the adjusting step (170), an updating step (180) wherein the group (P) is updated as being the adjusted group (P''),

the steps of evaluating (130), generating (150), modifying (160), adjusting (170) and updating (180) being iterated several times,

during the selecting step (190), the selected set (0*) being selected among the lastly determined adjusted group (P'').

9. The control method (100) according to claim 6 and 8, wherein during the updating step (180), the first parameter ($\alpha$) is updated to a greater value than its current value.

10. The control method (100) according to any of the preceding claim, wherein the adjusting step (170) comprises, for each modified yaw angle set ($\check{\Theta}^1, ... \check{\Theta}^N$), a single step of gradient descent process.

11. The control method (100) according to any of the preceding claims, wherein during the evaluating step (130), the power generated by the wind farm (10) is determined by a simulator, from each yaw angle ($\theta_i$) of a yaw angle set ($\Theta$), the wind direction (K) and the wind velocity (7).

12. The control method according to claim 11, wherein during the adjusting step (170), for each modified yaw angle set

($\check{\Theta}^1, ... \check{\Theta}^N$), a gradient of the power generated by the wind farm is determined using a finite difference process based on the simulator.

13. The control method according to any of the preceding claim, wherein the selecting step (190) further comprises adjusting the value of each yaw angle ($\theta_i$) of the selected yaw angle set (0*) based on a gradient descent process applied on the power generated by the wind farm (10),

   the desired yaw angles ($\theta_i^*$) being the yaw angles resulting from said gradient descent process.

14. A computer program product comprising software instructions which, when being executed by a computer, implement a control method according to any of the preceding claims.

15. An electronic control device (45) for controlling a wind farm (10) comprising a plurality of wind turbines (15i), based on an estimated general wind velocity (*V*) and an estimated wind direction (*K*) of the wind (*W*) on the wind farm (10),

   each wind turbine (15i) being configured, upon receiving a desired yaw angle ($\theta_i^*$), to rotate, around an elongation axis (E) respective of the wind turbine (15i), to reach a direction forming an angle with the wind direction (*K*) which is equal to said desired yaw angle ($\theta_i^*$), the electronic control device being configured to:

   - receive the wind direction (*K*) and the wind velocity (*V*),
   - determine a group (P) of yaw angles sets ($\Theta^1, ... \Theta^N$), each yaw angle set ($\Theta^1, ... \Theta^N$) comprising a yaw angle ($\theta_i$) respective of each wind turbine (15i), each yaw angle set ($\Theta^1, ... \Theta^N$) comprising, for each wind turbine (15i), a respective yaw angle value ($\theta_i$),
   - evaluate, for each yaw angle set ($\Theta^1, ... \Theta^N$), a power generated by the wind farm (10) based on each yaw angle ($\theta_i$) of the yaw angle set ($\Theta^1, ... \Theta^N$), on the wind velocity (*V*) and the estimated wind direction *(K),*
   - generate some new yaw angle sets ($\hat{\Theta}^1, ... \hat{\Theta}^N$) from the group (P) of yaw angle set ($\Theta^1, ... \Theta^N$), based on the evaluated power generated of each yaw angle set ($\Theta^1, ... \Theta^N$),
   - modify, for each generated yaw angle sets ($\hat{\Theta}^1, ... \hat{\Theta}^N$), the value of each yaw angle ($\hat{\theta}_l$) according to probability law, to obtain modified yaw angle sets ($\check{\Theta}^1, ... \check{\Theta}^N$)
   - adjust, for each modified yaw angle set ($\check{\Theta}^1, ... \check{\Theta}^N$), the value of each corresponding yaw angle ($\theta_i$) based on a gradient descent process applied on the power generated by the wind farm, to obtain a group (P") of adjusted yaw angle sets ($\overline{\Theta}^1, ..., \overline{\Theta}^N$), further denoted adjusted group (P"),
   - select, among the adjusted yaw angle sets ($\overline{\Theta}^1, ..., \overline{\Theta}^N$), the set (0*) for which the power generated is the highest, the yaw angle of such selection set being the desired yaw angles ($\theta_i^*$), and

   - send, to each wind turbine (15i), the respective desired yaw angle ($\theta_i^*$).

# FIG.1

**FIG.2**

FIG.3

Europäisches
Patentamt

European
Patent Office

Office européen
des brevets

# EUROPEAN SEARCH REPORT

**Application Number**

EP 24 30 7345

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GEBRAAD P M O ET AL: "A data-driven model for wind plant power optimization by yaw control", 2015 AMERICAN CONTROL CONFERENCE (ACC), IEEE, 4 June 2014 (2014-06-04), pages 3128-3134, XP032621887, ISSN: 0743-1619, DOI: 10.1109/ACC.2014.6859118 [retrieved on 2014-07-17] * Abstract, Section IV (pages 3131-3132) * ----- | 1-15 | INV. F03D7/02 F03D7/04 |
| X | HUANG ZISHUO ET AL: "An efficient solution for large offshore wind farm power optimization with the Porté-Agel wake model: Optimality and efficiency", ENERGY, ELSEVIER, AMSTERDAM, NL, vol. 306, 14 July 2024 (2024-07-14), XP087584027, ISSN: 0360-5442, DOI: 10.1016/J.ENERGY.2024.132444 [retrieved on 2024-07-14] * Abstract, Section 3 (pages 6-11) * ----- | 1-15 | |
| | | | **TECHNICAL FIELDS SEARCHED (IPC)** |
| X | FLEMING PAUL A ET AL: "Serial-Refine Method for Fast Wake-Steering Yaw Optimization", JOURNAL OF PHYSICS: CONFERENCE SERIES, IOP PUBLISHING, BRISTOL, GB, vol. 2265, no. 3, 1 May 2022 (2022-05-01), XP020424788, ISSN: 1742-6588, DOI: 10.1088/1742-6596/2265/3/032109 [retrieved on 2022-05-01] * the whole document * ----- -/-- | 1-15 | F03D |

The present search report has been drawn up for all claims

| Place of search | Date of completion of the search | Examiner |
|---|---|---|
| The Hague | 11 June 2025 | Libeaut, Laurent |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

Europäisches
Patentamt

European
Patent Office

Office européen
des brevets

**EUROPEAN SEARCH REPORT**

Application Number

EP 24 30 7345

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GEBRAAD PIETER M O ET AL: "A model-free distributed approach for wind plant control", 2015 AMERICAN CONTROL CONFERENCE (ACC), IEEE, 17 June 2013 (2013-06-17), pages 628-633, XP032476289, ISSN: 0743-1619, DOI: 10.1109/ACC.2013.6579907 [retrieved on 2013-08-14] * the whole document * | 1-15 | |
| | ----- | | |
| | | | TECHNICAL FIELDS SEARCHED (IPC) |

The present search report has been drawn up for all claims

| Place of search | Date of completion of the search | Examiner |
|---|---|---|
| The Hague | 11 June 2025 | Libeaut, Laurent |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................

& : member of the same patent family, corresponding document

EPO FORM 1503 03.82 (P04C01)